# EUROPÄISCHE PATENTANMELDUNG

(11) **EP 0 934 970 A2**
(43) Veröffentlichungstag der Anmeldung: **11.08.1999**
(21) Anmeldenummer: 99102121.3
(22) Anmeldetag: 03.02.1999
(51) Int. Cl.: C08J 5/22

(54) **Antifouling-Membranen**

(30) Priorität: 06.02.1998 DE 19804638
(71) Anmelder: GKSS-FORSCHUNGSZENTRUM GEESTHACHT GMBH, 21502 Geesthacht (DE)
(72) Erfinder: Schossig-Tiedemann, Michael, 21493 Schwarzenbek (DE); Masson, Michael Dr., 28211 Bremen (DE); Perner, Holger Dr., 21483 Lütau (DE); Delhaye, Severine, 59100 Roubaix (FR)
(74) Vertreter: Niedmers, Ole, Dipl.-Phys.

(57) **Zusammenfassung**

Die vorliegende Erfindung betrifft ein Verfahren zur Herstellung einer Membran, insbesondere einer Polymermembran, durch Polymerisation eines Ausgangsstoffgemisches und fener betrifft die Erfindung eine entsprechende Membran.

Die Erfindung zeichnet sich dadurch aus, daß das Ausgangsstoffgemisch zur Herstellung einer Membran und die Membran selbst ein Biozid enthält.

## Beschreibung

Die vorliegende Erfindung betrifft ein Verfahren zur Herstellung einer Membran, insbesondere einer Polymermembran durch Polymerisation eines Ausgangsstoffgemisches. Die vorliegende Erfindung betrifft ferner eine entsprechende Membran.
Bei Membranen, wie insbesondere Lösungsdiffusionsmembranen und porösen Membranen, die insbesondere in wässrigem Milieu Anwendung finden, kommt es immer wieder zum Aufwuchs durch Mikroorganismen auf den Membranen sowie zur biogenen Zersetzung der Membranen. Der Aufwuchs durch Mikroorganismen, insbesondere Bakterien, führt zur Bildung eines dichten Filmes auf der Membran, da die Organismen exopolymere Substanzen (IPS) ausscheiden, die sie sowohl an die Membran als auch untereinander binden.

Der so entstandene Biofilm führt zu einem Leistungsabfall der Membran und beispielsweise eines Sensors, der mit einer Membran verbunden ist. Nach Überschreiten einer festgelegten Toleranzgrenze der Membraneigenschaften wird von einem Biofouling der Membran gesprochen.

Der Leistungsabfall bei Membraneinsatz in der Sensortechnik kann darin bestehen, daß beispielsweise bei Lösungsdiffusionsmembranen zur Gasmessung oder bei porösen Membranen zur Messung gelöster Stoffe die Mikroorganismen im Biofilm in Wechselwirkung mit den Analyten treten und so eine quantitative Analyse in Korrelation zur Einsatzzeit zunehmend erschwert wird. Biofouling kann beispielsweise in der Sensortechnik dazu führen, daß das Sensorsignal überwiegend von Vorgängen im Biofilm auf der Membran beeinflußt wird.

Bei Membranen in Reversosmoseanlagen für die Wasseraufbereitung führt Biofouling in Abhängigkeit vom Nährstoffangebot im Rohwasser innerhalb einiger Wochen oder Monate zu einem erheblichen Rückgang der Brauchwasserproduktion. Zusätzlich kann der Bewuchs zu einer Zerstörung beziehungsweise Auflösung der Membranstruktur bei biologisch leicht abbaubaren Membranen, wie beispielsweise Zellulosemembranen, führen.

Diese Probleme sind beispielsweise in der Sensortechnik bisher derart gelöst worden, daß, soweit möglich, eine manuelle Zwischenreinigung der Membran durchgeführt wird, beziehungsweise die Membran regelmäßig ausgetauscht wurde. Diese Lösungen sind jedoch arbeits- und kostenintensiv und vor allem gewährleisten sie keine gleichmäßige Membranleistung.

Für den Fall der Wasseraufbereitung, insbesondere der Reversosmosetechnik, ist beispielsweise aus der DE-A-312 13 37 bekannt, biozide Stoffe im Rohwasser elektrolytisch freizusetzen und das Rohwasser durch silberbeschichtete Aktivkohle zu filtern. Auch diese Methode ist kostenintensiv und verzögert lediglich das Biofouling, können dieses allerdings nicht sicher verhindern. Zudem kommt es durch den zusätzlichen apparativen Aufwand zu höheren Betriebskosten. Grundsätzlich bleibt nämlich eine unbehandelte Membran immer anfällig für einen Bewuchs durch Mikroorganismen. Wenn ferner nach einem Einsatz von Bioziden die abgestorbenen Biofilme nicht gründlich entfernt werden oder wenn die durch UV-Licht abgetöteten Organismen auf die Membran gelangen, bildet dieses organische Material einen geeigneten Nährboden für Biofilme, die sich sehr schnell wieder ausbreiten. Dieses Phänomen, das "Regrowth" genannt wird, wird sehr häufig beobachtet. Zudem stellt sich als weiterer Nachteil der Behandlung von Bioziden im Rohwasser dasjenige der Entsorgung des toxischen Materials mit der damit einhergehenden möglichen Belastung der Umwelt.

Die Aufgabe der vorliegenden Erfindung ist es, ein kostengünstiges Verfahren und eine entsprechend hergestellte Membran anzugeben, die selbst den Aufwuchs durch Mikroorganismen verhindert und dabei wenig bis verschwindend geringe Mengen toxischen Materials an das umgebende Medium abgibt. Zudem ist es Aufgabe der vorliegenden Erfindung, ein Verfahren zur Herstellung einer Membran und eine Membran anzugeben, die vor biogener Zersetzung geschützt werden.

Gelöst wird die vorliegende Aufgabe durch die Merkmale des Patentanspruchs 1 und die Merkmale der Patentansprüche 10 und 11. Weiterbildungen der vorliegenden Erfindung sind Gegenstand der Unteransprüche 2 bis 9 und 12 bis 14.

Die erfindungsgemäß hergestellte Membran soll insbesondere die Membran in wässrigen Phasen vor Biofouling schützen. Dieses erfolgt insbesondere für porenfreie Membranen immer dann, wenn Gase in Lösungen oder aus Lösungen transportiert werden. Dabei soll insbesondere eine Nutzung im technischen Bereich, wie zum Beispiel der Sauerstoffbegasung in Klärwerken, der Entgasung von Flüssigkeiten, zum Beispiel zur Verhinderung von Kavitationen oder zur Entfernung von CO₂ beziehungsweise der Einsatz bei Sensoren insbesondere bei der Gassensorik und zum Austrag von Dämpfen aus einer wässrigen Phase (Pervaporation) stattfinden. Erfindungsgemäße Membranen können auch porös sein und sollen insbesondere in wässrigen Phasen vor Biofouling schützen, wie beispielsweise bei der Aufbereitung von Brauchwasser, bei der Reinigung von Abwasser und im Einsatz in der Sensortechnik zur semipermeablen Trennung von Meßbereich und Meßgut.

Die vorgenannte Aufgabe wird erfindungsgemäß gelöst durch ein Verfahren zur Herstellung einer Membran, insbesondere einer Polymermebran durch Polymerisation eines Ausgangsstoffgemisches, wobei das Ausgangsstoffgemisch ein Biozid enthält. Dabei wird ein Biozid, das vorzugsweise wasserunlöslich ist, vor der Polymerisation zu dem Ausgangsstoff beziehungsweise dem Ausgangsstoffgemisch, wie insbesondere Monomere, der Membran zugeführt. Nach Polymerisation ist das Biozid in die Membran eingebracht. Hierbei wird das Polymer an sich im wesentlichen nicht geändert. Das Biozid ist vielmehr in der Membran mehr oder weniger leicht beweglich. Kommt eine Zelle, wie beispielsweise ein Mikroorganismus in Kontakt mit der Membranoberfläche, so nimmt sie das Biozid direkt aus der Membran auf. Je nachdem welche Wirkbestandteile das Biozid aufweist, kommt es zu einer schnellen und sicheren Abtötung des jeweiligen Mikroorganismus. Das heißt, daß die Membran selbst durch Aufweisen des Biozides den Bewuchs verhindert. Die Antifouling-Eigenschaft bleibt dadurch über einen längeren Zeitraum erhalten, während die physikalischen Eigenschaften der Membran im wesentlichen während und nach dem Abgeben des Biozids unverändert bleiben.

Vorzugsweise ist ein Verfahren vorgesehen, bei dem mit dem Ausgangsstoffgemisch ein Träger benetzt wird, wodurch dünne Membranen bereitgestellt werden können. Weiter vorzugsweise enthält der Träger Polyetherimid.

Wenn vorzugsweise das Ausgangsstoffgemisch Polydimethylsiloxan enthält, kann eine Lösungsdiffusionsmembran hergestellt werden, die zur Separation von Gasen aus wässrigen Lösungen dient.

Vorzugsweise ist das Biozid organisch. Dieses hat den Vorteil , daß das Biozid nach Abgabe aus der Membran im wesentlichen beziehungsweise ganz abgebaut werden kann.

Wenn das Biozid in einer Konzentration von 0,1 bis 10 Gewichtsprozent in bezug auf das Gewicht des Ausgangsstoffgemisches beigefügt ist, kann die Membran auch bei sehr guten Wachstumsbedingungen der Mikroorganismen über eine längere Zeit wie vorgesehen funktionieren. Vorzugsweise liegt die Konzentration in einem Bereich von 0,1 bis 1%. Die Schutzfunktion des Biozids gegen Fouling verlängert sich zudem, wenn vorzugsweise eine größere Membranstärke verwendet wird. Wenn vorteilshafterweise das Biozid wenigstens einen Elektronenfänger und wenigstens ein Halogen aufweist, wird im Krebbs-Zyklus der Atmungskette der Mikroorganismus gestört und zudem werden in der Zelle des Mikroorganismus hochtoxische Halogenradikale aktiv. Vorzugsweise ist der Elektronenfänger Isothiazolin beziehungsweise wenigstens ein hydriertes Derivat der Isothiazole. Diese wirken aufgrund der relativ hohen Elektronenaffinität besonders gut in der Zelle des Mikroorganismus als Elektronenfänger im Krebbs-Zyklus der Atmungskette. Als Halogen kommen vorzugsweise Chlor und Fluor in Frage.

Erfindungsgemäß ist eine Membran vorgesehen, die nach einem der vorgenannten Verfahren herstellbar ist.

Weiter ist erfindungsgemäß eine Membran, insbesondere eine Polymermembran, dadurch gekennzeichnet,daß sie ein Biozid enthält. Diese Membran verhindert durch das Beinhalten des Biozids selbst den Bewuchs. Aufgrund des Beinhalten des Biozids bleiben die Antifouling- Eigenschaften über einen langen Zeitraum erhalten, wodurch die physikalischen Eigenschaften der Membran während und nach dem Abgeben des Biozides im wesentlichen unverändert bleiben. Das Biozid selbst ist vorzugsweise in der Memnran beweglich.

Vorzugsweise ist das Biozid im wesentlichen gleichmäßig in der Membran verteilt. Durch diese Maßnahme wird eine gleichmäßige Wirkung auf der Membran des Biozids erreicht.

Wenn vorzugsweise das Biozids in einer höheren Konzentration an den aktiven Oberflächen der Membran im Vergleich zur restlichen Membran vorliegt, ist eine effektivere Wirkung des Biozids gewährleistet.

Wenn vorzugsweise das Biozid in einer niedrigeren Konzentration an den aktiven Oberflächen der Membran im Vergleich zur restlichen Membran vorliegt, kann die Membran über einen längeren Zeitraum ihre Antifouling Eigenschaften behalten.

Als weitere Vorteile der vorliegenden Erfindungen sind diejenigen zu nennen, daß für den Anwender keine hohen zusätzlichen Kosten anfallen, um die Membran vor Biofouling zu schützen. Beim Monitoringeinsatz von Sensoren werden lange Wartungsintervalle erreicht, was ebenfalls zur Kostenreduktion führt. Zudem gewährleistet der Schutz vor Biofouling langfristig stabile Messungen. Die Belastung der Umwelt durch das Biozid ist sehr gering, da es nur in geringsten Konzentrationen in das flüssige Medium, wie insbesondere Wasser, gerät und biologisch schnell abgebaut werden kann. Die AntifoulingEigenschaft der Membranen bleiben lange erhalten. Die entsprechend zu erreichenden Zeiträume liegen wenigstens bei einem viertel Jahr.

Die Erfindung wird nachstehend ohne Beschränkung des allgemeinen Erfindungsgedankens anhand von Ausführungsbeispielen erläutert.

Als Ausführungsbeispiel wird die Erfindung zur Herstellung einer Kompositmembran aus Polydimethylsiloxan (PDMS), die als Lösungsdiffusionsmembran zur Separation von Gasen aus wässrigen Lösungen dient,beschrieben.

Das Verfahren zur Herstellung erfolgte dergestalt, daß auf einem Vlies aus Polyesterfasern ein poröser Träger aus Polyetherimid aufgebracht wurde. Dieser Träger wurde mit der PDMS-Rohmasse benetzt. Zuvor wurde die PDMS-Rohmasse mit 4% eines in Xylol gelösten Biozides 4,5-Dichloro-2-n-octyl-4-isothiazolin-3-on (Dichlor-OIT) versetzt. Die Membran wurde zu einer Schichtdicke von 10µm vernetzt.

Vorzugsweise wird bei dem genannten Herstellungsverfahren ein Biozid und gegebenenfalls ein Lösungsmittel, in das das Biozid gelöst sein kann verwendet, das die Polymerisation des Rohmaterials der Membran nicht beeinflußt beziehungsweise das am Rohmaterial entstehende Polymer in deren chemischen Bestandteilen nicht verändert.

## Patentansprüche

1. Verfahren zur Herstellung einer Membran, insbesondere einer Polymermembran, durch Polymerisation eines Ausgangsstoffgemisches, dadurch gekennzeichnet, daß das Ausgangsstoffgemisch ein Biozid enthält.

2. Verfahren nach Patentanspuch 1, dadurch gekennzeichnet, daß mit dem Ausgangsstoffgemisch ein Träger benetzt wird.

3. Verfahren nach Anspruch 1 und/oder 2, dadurch gekennzeichnet, daß der Träger Polyetherimid enthält.

4. Verfahren nach einem oder mehreren der Ansprüche 1 bis 3, dadurch gekennzeichnet, daß das Ausgangsstoffgemisch Polydimethylsiloxan enthält.

5. Verfahren nach einem oder mehreren der Ansprüche 1 bis 4, dadurch gekennzeichnet, daß das Biozid organisch ist.

6. Verfahren nach einem oder mehreren der Ansprüche 1 bis 5, dadurch gekennzeichnet, daß das Biozid in einer Konzentration von 0,1 bis 10 Gewichtsprozent in bezug auf das Gewicht des Ausgangsstoffgemisches beigefügt ist.

7. Verfahren nach Anspruch 6, dadurch gekennzeichnet, daß die Konzentration in einem Bereich von 0,1 bis 1% liegt.

8. Verfahren nach einem oder mehreren der Ansprüche 1 bis 7, dadurch gekennzeichnet, daß das Biozid wenigstens einen Elektronenfänger und wenigstens ein Halogen aufweist.

9. Verfahren nach Anspruch 8, dadurch gekennzeichnet, daß der Elektronenfänger Isothiazolin ist.

10. Membran herstellbar nach dem Verfahren nach einem oder mehreren der Ansprüche 1 bis 9.

11. Membran, insbesondere Polymermembran, dadurch gekennzeichnet, daß sie ein Biozid enthält.

12. Membran nach Anspruch 11, dadurch gekennzeichnet, daß das Biozid im wesentlichen gleichmäßig in der Membran verteilt ist.

13. Membran nach Anspruch 11, dadurch gekennzeichnet, daß das Biozid in einer höheren Konzentration an den aktiven Oberflächen der Membran im Vergleich zur restlichen Membran vorliegt.

14. Membran nach Anspruch 11, dadurch gekennzeichnet, daß das Biozid in einer niedrigeren Konzentration an den aktiven Oberflächen der Membran im Vergleich zur restlichen Membran vorliegt.
